# DEMANDE DE BREVET EUROPEEN

(11) **EP 3 926 497 A1**
(43) Date de publication de la demande: **22.12.2021**
(21) Numéro de dépôt: 20181008.2
(22) Date de dépôt: 19.06.2020
(51) Int. Cl.: G06F 21/16, G06F 21/10, G06F 21/64, H04L 9/08, H04L 9/32

(54) **PROCÉDÉ DE TRAÇABILITÉ D'UN ÉLÉMENT D'INFORMATION NUMÉRIQUE DANS UN SYSTÈME INFORMATIQUE**

(71) Demandeur: The Swatch Group Research and Development Ltd, 2074 Marin (CH)
(72) Inventeur: BAZIN, M. Jean-Luc, 2512 Tüscherz-Alfermée (CH)
(74) Mandataire: ICB SA

(57) **Abrégé**

L'invention concerne un procédé de traçabilité d'un élément d'information numérique (2) dans un système informatique (1) comprenant des dispositifs électroniques (4a, 4b, 4c, 4d) d'utilisateurs et un système d'archivage (3) d'éléments d'information numériques (2) comprenant une base de données distribuée (5a) de type chaîne de blocs, le procédé comprenant :
- une étape de réalisation de l'élément d'information numérique (2) à partir du dispositif électronique (4a, 4b, 4c, 4d, 4e, 4f) d'un des utilisateurs,
- une étape d'archivage dudit élément d'information numérique (2), ladite étape d'archivage comprenant une sous-étape de génération d'un élément d'identification (6) de la version de l'élément d'information numérique (2),
le procédé comprenant une étape d'ajout de l'élément d'identification (6) signé au moyen d'un élément de sécurisation associé à cet utilisateur et/ou à son dispositif électronique (4a à 4f) dans ladite base données distribuée (5a), ladite étape d'ajout comprenant une sous-étape de chiffrement dudit élément d'identification (6) à partir d'un algorithme de cryptographie et de l'élément de sécurisation, l'algorithme de cryptographie comprenant au moins une variable métrique associé à l'utilisateur.

## Description

### Domaine technique

La présente invention concerne un procédé de traçabilité d'un élément d'information numérique dans un système informatique comprenant des dispositifs électroniques d'utilisateurs connectés à un système d'archivage d'éléments d'information numériques.

L'invention concerne également un programme d'ordinateur.

### Art antérieur

Les procédés de traçabilité d'éléments d'information numériques sont classiquement mis en en oeuvre dans des systèmes informatiques afin de connaitre l'utilisation de ces éléments d'information numériques et en particulier, l'évolution de cette utilisation dans le temps. Ces éléments d'information numériques sont des fichiers numériques comprenant des informations telles que des informations techniques ou encore des informations textuelles, audio ou vidéo. A titre d'exemple, lorsque l'élément d'information numérique comprend des informations techniques relatives à une pièce d'horlogerie, la traçabilité de cet élément d'information permet de suivre l'évolution dans le temps des informations techniques relatives à la conception de la pièce. Ces informations techniques dans cet exemple, peuvent porter sur un ou plusieurs plans conceptuels de cette pièce.

On connait dans l'état de la technique des systèmes informatiques comprenant des bases de données distribuées de type chaîne de blocs qui participent à la mise en œuvre de tels procédés de traçabilité. Dans ces systèmes, ces bases de données contribuent notamment à la sécurisation du stockage de tels éléments d'information numériques et ce, par la réalisation d'un chiffrement systématique de ces derniers à partir d'algorithmes cryptographiques.

Toutefois avec la mise au point d'ordinateurs quantiques dotés de puissance de calcul de plus en plus élevée capable de traiter des volumes quantiques pouvant atteindre 64 qubit, une telle sécurisation de ces éléments d'information numériques pourrait être compromise.

Dans ce contexte, on comprend qu'il existe un besoin de trouver une solution, notamment qui ne présente pas les inconvénients de l'art antérieur.

### Résumé de l'invention

Un but de la présente invention est par conséquent de proposer une solution de traçabilité d'éléments d'information numériques qui soit sécurisée, fiable, sure et robuste.

Dans ce dessein, le procédé de traçabilité d'un élément d'information numérique dans un système informatique comprenant des dispositifs électroniques d'utilisateurs et un système d'archivage d'éléments d'information numériques comprenant une base de données distribuée de type chaîne de blocs, le procédé comprenant :
- une étape de réalisation de l'élément d'information numérique à partir du dispositif électronique d'un des utilisateurs,
- une étape d'archivage dudit élément d'information numérique, ladite étape d'archivage comprenant une sous-étape de génération d'un élément d'identification de la version de l'élément d'information numérique,
le procédé comprenant une étape d'ajout de l'élément d'identification signé au moyen d'un élément de sécurisation associé à cet utilisateur et/ou à son dispositif électronique dans ladite base données distribuée, ladite étape d'ajout comprenant une sous-étape de chiffrement dudit élément d'identification à partir d'un algorithme de cryptographie et de l'élément de sécurisation, l'algorithme de cryptographie comprenant au moins une variable métrique associé à l'utilisateur.

Dans d'autres modes de réalisation :
- ladite sous-étape de génération comprend une phase de calcul d'une valeur de hachage pour ledit élément d'information numérique ;
- ladite étape d'archivage comprend une sous-étape de stockage de l'élément d'information numérique associé à l'élément d'identification dans une autre base de données du système d'archivage à laquelle sont connectés les dispositifs électroniques des utilisateurs. ;
- ladite au moins une variable métrique de l'algorithme de cryptographie est une variable d'environnement relative à des caractéristiques environnementales de l'utilisateur ;
- ladite au moins une variable métrique de l'algorithme de cryptographie est une variable de localisation relative à des caractéristiques de géolocalisation de cet utilisateur ;
- ladite au moins une variable métrique de l'algorithme de cryptographie est une variable biométrique relative à des caractéristiques biologiques de l'utilisateur, et/ou
- ladite au moins une variable métrique de l'algorithme de cryptographie est une variable temporelle relative à la date à laquelle l'étape d'ajout est initiée.
- la variable d'environnement comprend une valeur relative à la température, au taux d'humidité ou encore à la pression atmosphérique mesurée dans l'environnement dans lequel est localisé l'utilisateur ;
- la variable de localisation comprend une valeur relative à des coordonnées géographiques mesurées par un dispositif de géolocalisation portée par l'utilisateur ou à d'un code de localisation.
- le procédé comprend une étape d'accès au système d'archivage d'éléments d'information numériques par le dispositif électronique d'un des utilisateurs à partir d'un élément d'accès associé au dispositif électronique et/ou à l'utilisateur, et
- l'élément de sécurisation est une clef privée et l'élément d'accès est un certificat ou une clef publique.

L'invention concerne un programme d'ordinateur comprenant des instructions de code de programme pour l'exécution des étapes de ce procédé lorsque ledit programme est exécuté par une unité de contrôle du système d'archivage et le dispositif électronique de l'utilisateur.

### Brève description des figures

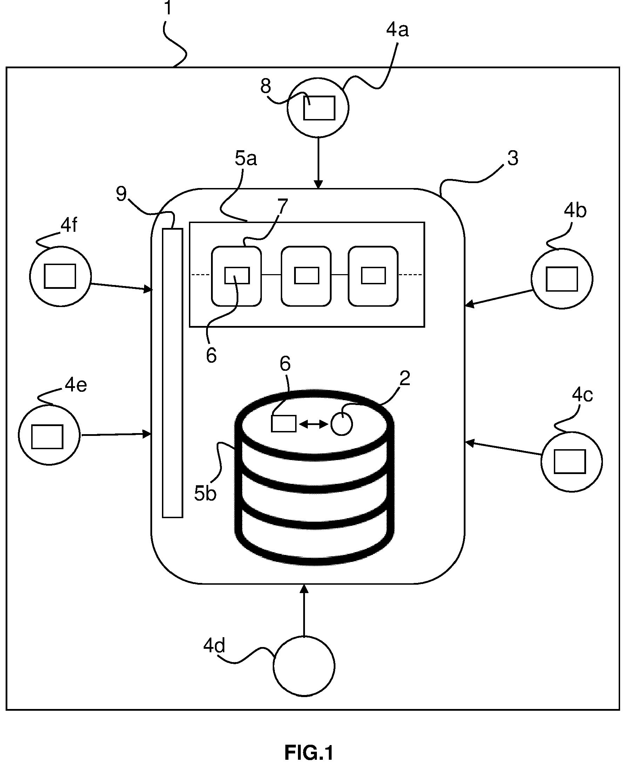

D'autres particularités et avantages ressortiront clairement de la description qui en est faite ci-après, à titre indicatif et nullement limitatif, en référence à la figure 1 qui est une représentation schématique d'une mise en œuvre de l'invention.

### Description détaillée de l'invention

Sur la figure 1 est illustré un procédé de traçabilité d'un élément d'information numérique 2 dans un système informatique 1 comprenant des dispositifs électroniques 4a à 4b d'utilisateurs et un système d'archivage 3 d'éléments d'information numériques 2. Ces éléments d'information numériques 2 sont des fichiers numériques comprenant des informations numériques du type informations techniques, informations textuelle, audio ou vidéo, ou encore des informations relatives à des applications informatiques (par exemple du code source). A titre d'exemple, ces informations numériques peuvent être relatives à des données techniques portant sur des pièces d'horlogerie (par exemple : plans conceptuels d'un mouvement horloger ou d'un composant horloger), des données cadastrales, des données de transactions bancaires, des données médicales de patients, des données d'identités numériques, etc...

Dans le système informatique 1, le système d'archivage 3 d'éléments d'information numériques 2 comprend des première et deuxième bases de données 5a, 5b respectivement une base de données distribuée 5a de type chaîne de blocs et une autre base de données 5b de type non relationnelle ou relationnelle. La chaîne de blocs 5a est une base de données distribuée et sécurisée dans laquelle des éléments d'identification 6 successifs réalisés par les dispositifs électroniques 4a à 4f des utilisateurs, sont archivés chronologiquement sous forme de blocs 7 liés les uns aux autres. Ces éléments d'identification 6 que nous décrirons plus en détail par la suite, sont relatifs aux différentes versions de l'élément d'information numérique 2. La chaîne de blocs 5a peut être donc un registre simultanément enregistré et synchronisé sur un réseau d'ordinateurs, qui évolue par l'addition de nouveaux éléments d'identification 6 préalablement validés par l'entièreté du réseau et destinés à ne jamais être modifiés ou supprimés. Ce registre distribué est donc une masse d'éléments d'identification 6 distribués sur plusieurs ordinateurs. Autrement dit, ce registre permet de réaliser une base de données dans laquelle les éléments d'identification 6 constituant les données, sont répartis parmi les utilisateurs agissant sur cette chaîne de blocs 5a. La chaîne de blocs 5a peut ainsi être distribuée aux différents ordinateurs par l'intermédiaire d'un mécanise de type pair-à-pair (ou « peer to peer » en langue anglaise). Cette chaîne de blocs 5a dispose de mécanismes de gestion permettant d'être assuré à tout moment d'un niveau de confiance suffisant en la non-falsification des éléments d'identification 6.

Le système d'archivage 3 comprend une unité de contrôle 9 comportant au moins un microcontrôleur. Cette unité de contrôle 9 est reliée aux dispositifs électroniques 4a à 4b permettant ainsi aux utilisateurs d'interagir avec le système d'archivage 3 de ce système informatique 1. Chaque dispositif électronique 4a à 4f comprend une unité de traitement 8 comportant des éléments logiciels et matériels (processeur, éléments de mémoire) ainsi qu'une interface homme-machine. Le dispositif électronique 4a à 4f peut être de manière non limitative et non-exhaustive un ordinateur, un ordiphone ou une tablette ou encore une montre connectée. On notera que ces utilisateurs peuvent être selon la nature et les caractéristiques des éléments d'information numériques 2 : des employés d'une société telle qu'une manufacture horlogère, des employés d'un bureau d'étude ou encore des consommateurs, des commerçants électroniques professionnels ou non qui sont vendeurs de biens ou fournisseurs de services, des entités juridiques ou administratives, etc...

Dans ce contexte, ce procédé comprend une étape d'accès au système d'archivage 3 d'éléments d'information numériques 2 par le dispositif électronique 4a à 4f d'un des utilisateurs à partir d'un élément d'accès associé au dispositif électronique 4a à 4f et/ou à l'utilisateur. Cet élément d'accès est associé au dispositif électronique 4a à 4f et/ou à l'utilisateur car il a été généré spécifiquement pour ce dispositif électronique 4a à 4f et/ou son utilisateur dans le cadre d'une utilisation relative à ce système d'archivage 3. Un tel élément d'accès peut être archivé dans des éléments de mémoire de l'unité de traitement 8 du dispositif électronique 4a à 4f qu'utilise l'utilisateur pour se connecter et interagir avec le système d'archivage 3. Cet élément d'accès peut aussi être compris dans un support de données tel qu'une clef USB (acronyme de Universal Serial Bus pour bus universel en série) ou une carte magnétique ou encore une carte à puce. Un tel support de données est apte à être connecté au dispositif électronique 4a à 4f. On comprend que l'accès au système d'archivage 3 est donc un accès aux première et deuxième bases de données 5a, 5b et donc en particulier à la chaîne de blocs 5a.

Ce procédé comprend ensuite une étape de réalisation de l'élément d'information numérique 2 à partir du dispositif électronique 4a à 4f de l'utilisateur. Cette étape peut être réalisée avant ou après l'étape d'accès. Lors de cette étape de réalisation, le dispositif électronique 4a à 4f de l'utilisateur génère l'élément d'information numérique 2 à partir de son unité de traitement 8. Comme nous l'avons vu précédemment, cet élément d'information numérique 2 est un fichier comprenant des informations techniques sous forme de texte et de figures/dessins relatifs à une pièce d'horlogerie.

Par la suite, le procédé comprend une étape d'archivage dudit élément d'information numérique 2. Cette étape d'archivage comprend une sous-étape de génération de l'élément d'identification 6 de la version dudit élément d'information numérique 2. Plus précisément, cette sous-étape de génération comporte une phase de calcul d'une valeur de hachage pour ledit élément d'information numérique 2. Cette valeur de hachage relative à l'élément d'information numérique 2 est unique. Lors de cette phase de calcul, l'unité de traitement 8 du dispositif électronique 4a à 4f de l'utilisateur met en œuvre une ou plusieurs opérations de calcul qui prévoient l'application d'une fonction de hachage audit élément d'information numérique 2 afin d'obtenir cette valeur de hachage.

L'étape d'archivage comprend ensuite une sous-étape de stockage de l'élément d'information 2 associé à l'élément d'identification 6 de la version de cet élément d'information 2 dans une autre base de donnée 5b encore appelée la deuxième base de données 5b, du système d'archivage 3 à laquelle sont connectés les dispositifs électroniques 4a à 4b des utilisateurs. Autrement dit, l'élément d'information 2 et l'élément d'identification 6 sont archivés ensemble dans cette deuxième base de données 5b et ce, en étant associés l'un à l'autre.

Le procédé comprend une étape d'ajout de l'élément d'identification 6 signé au moyen d'un élément de sécurisation associé à cet utilisateur et/ou à son dispositif électronique 4a à 4f dans la première base de données 5a, ici la base de données distribuée 5a. L'ajout de cet élément d'identification 6 est alors effectué par cet utilisateur au moyen de l'unité de traitement 8 du dispositif électronique 4a à 4f qui lui permet de se connecter à cette base de données distribuée 5a.

Dans ce procédé, l'élément de sécurisation est une clef privée et l'élément d'accès que nous avons évoqué précédemment est un certificat ou une clef publique. Le certificat électronique autrement appelé certificat numérique ou certificat à clef publique, peut être assimilé à une carte d'identité numérique de cet utilisateur et/ou de son dispositif électronique 4a à 4f. Il participe à permettre l'identification et/ou l'authentification de l'utilisateur et/ou de son dispositif électronique dans le cadre de l'accès au système d'archivage 3 et en particulier à la chaîne de blocs 5a. Ainsi cet élément d'accès permet donc à cet utilisateur et/ou son dispositif électronique d'accéder à cette chaîne et en particulier aux éléments d'indentification 6 compris dans les blocs 7 de cette chaîne 5a. Cet élément d'accès permet aussi à cet utilisateur et/ou son dispositif électronique de pouvoir ajouter de nouveaux éléments d'identification 6 dans cette chaîne de blocs 5a. On notera que de manière alternative dans d'autres modes de réalisation, l'élément de sécurisation peut être un certificat ou une clef publique et l'élément d'accès une clef privée.

Cette étape d'ajout comprend une sous étape de chiffrement dudit élément d'identification 6 à partir d'un algorithme de cryptographie et de l'élément de sécurisation. Plus précisément, l'élément d'identification 6 qui a été généré pour identifier la version de l'élément d'information numérique 2 réalisé par l'utilisateur, fait alors l'objet d'un chiffrement par cet algorithme qui met en œuvre l'élément de sécurisation et des variables métriques relatives à l'individu. Ces variables métriques sont associées à des valeurs relatives à des caractéristiques environnementales, de localisation et/ou biométriques de l'utilisateur. Autrement dit, ces variables métriques autrement appelées « variables métriques temps réels » ou encore « variables métriques instantanées » sont donc utilisées par l'algorithme de cryptographie et peuvent être :
- des variables d'environnement relatives à des caractéristiques environnementales de l'utilisateur ;
- des variables de localisation relatives à des caractéristiques de géolocalisation de cet utilisateur, et/ou
- des variables biométriques relatives à des caractéristiques biologiques de l'utilisateur.

Dans ce contexte, une variable d'environnement comprend par exemple une valeur relative à la température, au taux d'humidité ou encore à la pression atmosphérique mesurée dans l'environnement dans lequel est localisé l'utilisateur.

S'agissant d'une variable de localisation, elle comprend une valeur relative à des coordonnées géographiques mesurées par un dispositif de géolocalisation GNSS (acronyme de « Global Navigation Satellite System ») porté par l'utilisateur et qui est compatible avec les systèmes de géo-positionnement par satellites tels que les systèmes GLONASS^{™} (acronyme de « Global Navigation Satellite System »), Galiléo^{™}, QZSS^{™} (acronyme de « Quasi-Zenith Satellite System ») ou encore Beidou^{™}. Cette variable de localisation peut alternativement comprendre un code de localisation correspondant à une position exacte de l'utilisateur. Il peut s'agir d'un code court composé de 6 ou 7 chiffres et/ou lettres. Un tel code peut être généré par une plateforme technique de cartographie en ligne connu de l'état de la technique comme celle appartenant à la société Google avec son service « Pluscode^{™} » de Google Maps^{™}.

Concernant une variable biométrique, elle comporte une valeur relative à des caractéristiques biologiques mesurées de l'utilisateur telles que la température cutanée, le pouls, la fréquence respiratoire la saturation du sang en oxygène, l'impédance de la peau, l'arythmie respiratoire, le taux de sudation, la saturation du sang en oxygène ou encore le débit sanguin.

On notera que la variable métrique peut également être une variable temporelle relative à la date à laquelle l'étape d'ajout est initiée.

L'étape d'ajout comprend ensuite une sous-étape de stockage de l'élément d'identification 6 signé dans un nouveau bloc 7 de la chaîne 5a. Ainsi ce bloc 7 vient s'ajouter dans l'ordonnancement temporel des blocs 7 de la chaîne 5a.

Un telle procédé participe notamment à construire un système d'archivage 3 d'éléments d'information numériques 2 présentant des fonctionnalités de chiffrement aléatoires uniques avec des éléments de sécurisation quasi-inviolables voire inviolables. Les éléments d'information numériques 2 sont ainsi stockés dans le système d'archivage en étant associés à une date et une heure. Ainsi l'instant, auquel les opérations de modification et de sauvegarde de l'élément d'information numérique 2 sont réalisées, est donc enregistré grâce notamment à la base de données distribuée 5a.

L'invention porte aussi sur un programme d'ordinateur comprenant des instructions de code de programme pour l'exécution des étapes de ce procédé lorsque ledit programme est exécuté par l'unité de contrôle 9 du système d'archivage 3 et le dispositif électronique 4a, 4b, 4c, 4d, 4f de l'utilisateur.

## Revendications

1. Procédé de traçabilité d'un élément d'information numérique (2) dans un système informatique (1) comprenant des dispositifs électroniques (4a, 4b, 4c, 4d) d'utilisateurs et un système d'archivage (3) d'éléments d'information numériques (2) comprenant une base de données distribuée (5a) de type chaîne de blocs, le procédé comprenant :
- une étape de réalisation de l'élément d'information numérique (2) à partir du dispositif électronique (4a, 4b, 4c, 4d, 4e, 4f) d'un des utilisateurs,
- une étape d'archivage dudit élément d'information numérique (2), ladite étape d'archivage comprenant une sous-étape de génération d'un élément d'identification (6) de la version de l'élément d'information numérique (2),
le procédé comprenant une étape d'ajout de l'élément d'identification (6) signé au moyen d'un élément de sécurisation associé à cet utilisateur et/ou à son dispositif électronique (4a à 4f) dans ladite base données distribuée (5a), ladite étape d'ajout comprenant une sous-étape de chiffrement dudit élément d'identification (6) à partir d'un algorithme de cryptographie et de l'élément de sécurisation, l'algorithme de cryptographie comprenant au moins une variable métrique associé à l'utilisateur.

2. Procédé selon la revendication précédente, **caractérisé en ce que** ladite sous-étape de génération comprend une phase de calcul d'une valeur de hachage pour ledit élément d'information numérique (2).

3. Procédé selon la revendication précédente, **caractérisé en ce que** ladite étape d'archivage comprend une sous-étape de stockage de l'élément d'information numérique (2) associé à l'élément d'identification (6) dans une autre base de données du système d'archivage (3) à laquelle sont connectés les dispositifs électroniques (4a, 4b, 4c, 4d, 4e, 4f) des utilisateurs.

4. Procédé selon l'une quelconque des revendications précédentes, **caractérisé en ce que** ladite au moins une variable métrique de l'algorithme de cryptographie est :
- une variable d'environnement relative à des caractéristiques environnementales de l'utilisateur (4a, 4b, 4c, 4d) ;
- une variable de localisation relative à des caractéristiques de géolocalisation de cet utilisateur (4a, 4b, 4c, 4d) ;
- une variable biométrique relative à des caractéristiques biologiques de l'utilisateur (4a, 4b, 4c, 4d), et/ou
- une variable temporelle relative à la date à laquelle l'étape d'ajout est initiée.

5. Procédé selon l'une quelconque des revendications précédentes, **caractérisé en ce que** la variable d'environnement comprend une valeur relative à la température, au taux d'humidité ou encore à la pression atmosphérique mesurée dans l'environnement dans lequel est localisé l'utilisateur (4a, 4b, 4c, 4d).

6. Procédé selon l'une quelconque des revendications précédentes, **caractérisé en ce que** la variable de localisation comprend une valeur relative à des coordonnées géographiques mesurées par un dispositif de géolocalisation portée par l'utilisateur (4a, 4b, 4c, 4d) ou à d'un code de localisation.

7. Procédé selon l'une quelconque des revendications précédentes, **caractérisé en ce qu'**il comprend une étape d'accès au système d'archivage (3) d'éléments d'information numériques (2) par le dispositif électronique (4a à 4f) d'un des utilisateurs à partir d'un élément d'accès associé au dispositif électronique (4a à 4f) et/ou à l'utilisateur.

8. Procédé selon la revendication précédente, **caractérisé en ce que** l'élément de sécurisation est une clef privée et l'élément d'accès est un certificat ou une clef publique.

9. Programme d'ordinateur comprenant des instructions de code de programme pour l'exécution des étapes du procédé selon l'une quelconque des revendications 1 à 8 lorsque ledit programme est exécuté par une unité de contrôle (9) du système d'archivage (3) et le dispositif électronique (4a, 4b, 4c, 4d, 4f) de l'utilisateur.
